# EUROPÄISCHE PATENTANMELDUNG

(11) **EP 3 527 508 A1**
(43) Veröffentlichungstag der Anmeldung: **21.08.2019**
(21) Anmeldenummer: 19156497.0
(22) Anmeldetag: 11.02.2019
(51) Int. Cl.: B65G 9/00

(54) **SEITLICH TEILWEISE GESCHLOSSENER FÖRDERGUTBEHÄLTER UND ZUGEHÖRIGES FÖRDERGUTSYSTEM**

(30) Priorität: 09.02.2018 DE 102018202047
(71) Anmelder: Herzog-Lang, Viktor, 75210 Keltern (DE)
(72) Erfinder: Herzog-Lang, Viktor, 75210 Keltern (DE)
(74) Vertreter: RPK Patentanwälte Reinhardt, Pohlmann und Kaufmann Partnerschaft mbB

(57) **Zusammenfassung**

Die Erfindung betrifft einen Fördergutbehälter (1) für eine Hängefördereinrichtung (3) zum Transportieren von Fördergut (5), mit einem aufgehängten biegeschlaffen Material (7), das eine Bucht (9) bildet, in der das Fördergut (5) aufnehmbar ist.

Um einen möglichst einfach aufgebauten Fördergutbehälter (1) bereitzustellen, der dennoch einen sicheren Transport ermöglicht, ist vorgesehen, dass die Bucht (9) entlang einer Breite des biegeschlaffen Materials (7) eine offene Bucht (11) zur Aufnahme des Förderguts (5) und daran angrenzend zumindest eine geschlossene Bucht (13) aufweist.

## Beschreibung

### Gebiet der Erfindung

Die Erfindung betrifft einen Fördergutbehälter für eine Hängefördereinrichtung zum Transportieren eines Förderguts, mit einem aufgehängten biegeschlaffen Material, das eine Bucht bildet, in der das Fördergut aufnehmbar ist sowie ein Hängefördersystem mit einer Hängefördereinrichtung zum Transportieren von Fördergutbehältern.

### Stand der Technik

In automatisierten Warenlagern, Produktionsstätten und beim Warentransport wie zum Beispiel im Versandhandel ist es erforderlich, Fördergut möglichst automatisiert in Fördergutbehältern aufzunehmen. In diesen Fördergutbehältern können die Waren vor ihrer Auslieferung gelagert werden und gelangen so an die Station, in der sie für den Weitertransport zum Kunden verpackt werden. Der Transport innerhalb der Lager erfolgt üblicherweise über Hängefördereinrichtungen. Die Fördergutbehälter sind dabei meist Taschen, die wie Stoffbeutel gefertigt sind und oben mit einer Art Drahtbügel in ein Schienensystem eingehängt sind. Ein derartiger Fördergutbehälter ist z.B. aus der WO 2014/012965 A1 bekannt. Über ein Gestänge werden dessen Seitenwandelemente so angesteuert, dass die über einen Verbindungsbereich miteinander verbundenen Seitenwandelemente aufgeklappt werden können. Im Bereich einer Beladestation werden die Behälter zudem in eine horizontale oder geneigte Stellung überführt.

Vergleichbare Fördergutbehälter und zugehörige Hängefördereinrichtungen sind beispielsweise aus der DE 10 2004 018 569 A1, EP 2 130 968 A1 oder EP 2 196 415 A bekannt. Die dort beschriebenen Transporttaschen bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder z.B. gemäß der EP 2 130 968 A1 die Schlaufe nach unten geöffnet wird. Ferner ist aus der DE 103 54 419 A1 ein Fördergutträger bekannt, der eine relativ steife und flache Kunststoffwand mit einem Ausschnitt zum Be- und Entladen mit Fördergut aufweist,

Andere Fördergutbehälter sind gefertigt wie hängende flache Wannen aus Kunststoff, die einseitig mit elastischen Stoffen bezogen sind, was das Fördergut einklemmt.

Es ist bekannt, solche Fördergutbehälter mechanisiert zu beladen und manuell wieder zu entladen. Ein Transporttakt richtet sich nach dem langsamsten Vorgang, der auch von der Menge an transportiertem Fördergut abhängt. Insbesondere eine hohe Anzahl an einzelnen Fördergütern kann das Be- und/oder Entladen verlangsamen. Beispielsweise können das Entladen und/oder das Zusammenfügen zerlegter Transportbehälter den maximal möglichen Transporttakt bestimmen. Die EP 2 686 258 B1 betrifft ein Hängefördersystem mit einer Transporttasche zur automatischen Entladung eines geladenen Stückguts und mit einer Entladestation. Die Transporttasche weist einen horizontalen Boden auf, auf dem das Stückgut für Transportzwecke gelagert werden kann. Der Boden wirkt mit einer Hubeinrichtung zusammen, die eingerichtet ist, den Boden, der mit mindestens einem Stückgut beladenen Transporttasche, wenn sich die Transporttasche in einer Entladestellung befindet in einer vertikalen Richtung in der Art anzuheben, dass das mindestens eine Stückgut mittels einer Schubeinrichtung durch eine Stirnseite eines Grundkörpers der Transporttasche zentral ausschiebbar ist, und wobei die Schubeinrichtung einen Schieber aufweist, der durch eine andere Stirnseite des Grundkörpers in ein inneres des Grundkörpers eingreift, wo sich das mindestens eine Stückgut befindet, wenn der Boden angehoben ist. Zum Entladen sind also die zwei gegenüberliegenden geöffneten Stirnseiten, der in der vertikalen Richtung anhebbare Boden sowie der durch eine der Stirnseiten durchgreifende Schieber der Schubeinrichtung erforderlich.

Aus dem nachveröffentlichten DE 20 2017 100 206 U ist ein Fördergutbehälter für eine Hängefördereinrichtung zum Transportieren von Fördergut bekannt, der zwischen einer Öffnungsstellung und einer Schließstellung verstellbar ist. Der Fördergutbehälter weist eine teilweise geschlossene Seite auf, gegen die das Fördergut anschlagen kann und dadurch gegen ein versehentliches seitliches Herausfallen gesichert werden kann.

Die DE 10 2004 018 569 A1 betrifft eine Sammeleinrichtung zum Aufnehmen von Objekten wie Kleidungsstücken beim sortierenden Sammeln der Objekte und eine Fördervorrichtung zum Transport der Sammeleinrichtung. Die Sammeleinrichtung umfasst eine Sammeltasche, die im Wesentlichen ein mit einem in eine Fördervorrichtung integrierbaren Mitnahmeelement versehenes Rahmengestell und einen am Rahmengestell hängenden Taschenbeutel aufweist, wobei das Mitnahmeelement relativ zum Rahmengestell um eine quer zur Förderrichtung liegende Achse schwenkbar ist, und wobei bei horizontaler Anordnung des Rahmengestells der Taschenbeutel geöffnet und bei vertikaler Anordnung des Rahmengestells der Taschenbeutel zusammengefallen und im Wesentlichen geschlossen ist. Die Fördervorrichtung enthält eine Öffnungsvorrichtung, die die Sammeltaschen während des Transports öffnet und schließt. Die Sammeltaschen weisen jeweils Seitenwandungen auf, die sich von einer Bodenwandung nach oben erstrecken.

Die EP 2 130 968 A1 zeigt eine Transport-Tasche die eine Trage-Wand und eine flexible Boden-Seiten-Wand aufweist. Die in sich im Wesentlichen steife Trage-Wand weist an ihrem unteren Bereich mindestens eine Kupplung auf, in die am unteren Ende der Boden-Seiten-Wand angebrachte Gegen-Kupplungs-Mittel einrasten können. Die Kupplung wird vom oberen Bereich der Trage-Wand mittels eines Betätigungs-Hebels über eine Betätigungs-Stange betätigt. Mittels der Kupplung können eine nach unten hängende Trage-Wand und die parallel dazu verlaufende, ebenfalls nach unten hängende Boden-Seiten-Wand gänzlich voneinander getrennt werden, sodass diese nach unten offen parallel zueinander hängen. Mit geschlossener Kupplung kann eine Ware eingelegt werden, wobei die Sammeltasche trotzdem beidseitig offenbleibt. Bei geöffneter Kupplung fällt die Boden-Seiten-Wand nach unten und die Ware wird ebenfalls nach unten abgegeben.

### Zusammenfassung der Erfindung

Ausgehend von diesem Stand der Technik liegt der vorliegenden Erfindung die Aufgabe zugrunde, einen Fördergutbehälter zu schaffen, der vergleichsweise einfach aufgebaut ist und dennoch einen möglichst störungsfreien Transport ermöglicht.

Die Aufgabe ist bei einem Fördergutbehälter für eine Hängefördereinrichtung zum Transportieren eines Förderguts, mit einem aufgehängten biegeschlaffen Material, das eine Bucht bildet, in der das Fördergut aufnehmbar ist, dadurch gelöst, dass die Bucht entlang einer Breite des biegeschlaffen Materials eine offene Bucht zur Aufnahme des Förderguts und daran angrenzend zumindest eine geschlossene Bucht aufweist. Das biegeschlaffe Material kann bahnförmig gestaltet sein und an zwei Enden an einem Rahmen des Fördergutbehälters gelenkig aufgehängt sein. Das herabhängende beigeschlaffe Material, das beispielsweise ein Textil und/oder eine Folie aufweist, bildet dabei unter der Einwirkung einer Schwerkraft beispielsweise eine Kettenlinie. Insofern kann unter einer Bucht ein beliebig gekrümmter Verlauf verstanden werden, der an einem Ausgangspunkt beginnt und von dort ausgehend gekrümmt zu einem von diesem beabstandeten Ausgangspunkt verläuft, also beispielsweise eine Kettenlinie. Unter einer offenen Bucht kann verstanden werden, das ausgehend von den zwei Ausgangspunkten bis zu einem Buchtgrund ein Abstand zwischen den Lagen des biegeschlaffen Materials verbleibt, sodass darin das Fördergut aufgenommen werden kann. Entsprechend kann unter einer geschlossenen Bucht ein Verlauf ausgehend von den zwei Ausgangspunkten verstanden werden, der in einem Punkt oder einem Abschnitt zusammenläuft und von diesem weiter eine endlose Schlinge bildet, wobei der Buchtgrund in der endlosen Schlinge liegt und damit ausgehend von den zwei Ausgangspunkten nicht erreichbar ist.

Die Verläufe der offenen Bucht und der geschlossenen Bucht ergeben sich jeweils aus Sicht eines Längsschnitts durch den Fördergutbehälter. Genauer weisen ein in der Mitte liegender Längsschnitt des Fördergutbehälters einen Verlauf in Form der offenen Bucht und ein weiterer eher seitlich liegender Längsschnitt des Fördergutbehälters einen Verlauf in Form der geschlossenen Bucht auf. Dies hat den Vorteil, dass das Fördergut in der offenen Bucht beziehungsweise auf einem Buchtgrund der offenen Bucht gelagert werden kann und durch die daran angrenzende, insbesondere seitlich angrenzende, geschlossene Bucht gegen ein versehentliches seitliches Herausfallen gesichert ist. Insbesondere ist dazu die geschlossene Bucht an zumindest einer Seite des Fördergutbehälters vorgesehen, ohne dass dazu eine separate Seitenwand benötigt wird.

In der offenen Bucht kann das Fördergut aufgenommen werden, wobei dieses durch die daran angrenzende geschlossene Bucht gegen ein ungewolltes und/oder versehentliches seitliches Herausfallen geschützt beziehungsweise gesichert werden kann. Dadurch kann der Aufbau vereinfacht und dennoch ein störungsfreier Transport des Förderguts gewährleistet werden. Das biegeschlaffe Material weist also zumindest die zwei unterschiedlichen Längsschnitte auf, die die Form der offenen Bucht und der geschlossenen Bucht aufweisen. Zum Erzeugen der geschlossenen Bucht beziehungsweise an der geschlossenen Bucht sind herabhängende und gegenüberliegende Bahnen des biegeschlaffen Materials bereichsweise zusammengeführt, vorzugsweise bereichsweise miteinander verbunden. Das Zusammenführen, insbesondere die Verbindung kann seitlich an dem Fördergutbehälter, beispielsweise punktförmig oder in Form einer kurzen linienförmigen Verbindung wie einer einfachen Naht ausgeführt sein. Ein sonst zur Sicherung des Förderguts erforderlicher Zwickel bzw. eine zusätzlich eingenähte Seitenwand sind nicht erforderlich. Der Fördergutbehälter ist also seitenwandfrei aufgebaut und dadurch besonders einfach herstellbar, wobei dennoch ein besonders sicherer und/oder störungsfreier Transport des Förderguts möglich ist.

Bevorzugt kann der Fördergutbehälter zwischen einer Öffnungsstellung und einer Schließstellung verstellt werden, wobei dieser mit einem aufgenommenen Fördergut eine zwischen der Öffnungsstellung und der Schließstellung liegende Transportstellung einnimmt. In der Schließstellung oder in der Transportstellung befinden sich ein Buchtgrund der offenen Bucht und der geschlossenen Bucht auf einer gedachten Linie. Mit aufgenommenem Fördergut verläuft die Linie wannenförmig gekrümmt und ohne Fördergut im Wesentlichen geradlinig. Ein Eigengewicht des Förderguts kann also eine Verformung des biegeschlaffen Materials bewirken, wobei sich ein Durchhang des biegeschlaffen Materials entlang der gedachten Linie beziehungsweise des Buchtgrunds ergibt, der einem versehentlichen Herausfallen des Förderguts entgegenwirkt. Das Fördergut wird also unter Einwirkung der Schwerkraft in die Mitte des Fördergutbehälters zurückgestellt. Außerdem bildet die geschlossene Bucht einen Anschlag, der ebenfalls einem versehentlichen seitlichen Herausfallen entgegenwirkt. Der Fördergutbehälter weist also in einem beladenen Zustand den durch die zumindest eine, vorzugsweise beidseitige, geschlossene Bucht bewirkten Durchhang und den zumindest einen, vorzugsweise beidseitigen, Anschlag auf. Bevorzugt ergibt sich der Durchhang falls zwei geschlossenen Buchten vorgesehen sind. In diesem Fall ist die offene Bucht zwischen den zwei geschlossenen Buchten angeordnet, wobei der Buchtgrund beziehungsweise das biegeschlaffe Material zwischen den geschlossenen Buchten den von dem Transportgut verursachten Durchhang aufweist. Dadurch ist das Fördergut beidseitig gegen das versehentliche Herausfallen gesichert, wobei mit Fördergut der Durchhang sich bildet und/oder gebildet ist und ohne Fördergut der Durchhang sich zurückbildet und/oder zurückgebildet ist und dadurch der Fördergutbehälter raumsparend gepuffert werden kann. Das Fördergut kann also besonders sicher aufgenommen und ohne aufgenommenes Fördergut der Fördergutbehälter besonders platzsparend verstaut werden. Die zumindest eine geschlossene Bucht bildet den Anschlag zum Verhindern eines versehentlichen oder ungewollten seitlichen Herausfallens des Förderguts. Durch Versuche hat sich gezeigt, dass trotz der vorhandenen geschlossenen Bucht der Fördergutbehälter entlang seiner vollen Breite genutzt werden kann. Die geschlossene Bucht wirkt vorzugsweise als Transportsicherung für kleinere und/oder ein Textil aufweisende Fördergüter. Für größere Fördergüter wie Kartons und/oder Pakete ergibt sich eine andere Transportstellung, bei der die geschlossene Bucht den Innenraum des Fördergutbehälters nicht einschränkt, wobei aufgrund der Größe und des Eigengewichts dennoch ein versehentliches Herausfallen nicht stattfindet. Es ist also ein einfach aufgebauter und universell verwendbarer Fördergutbehälter möglich, der für vergleichsweise kleine und/oder leichte Fördergüter einen guten Schutz gegen versehentliches Herausfallen bietet und dennoch für größere Fördergüter ausreichend Transportraum bietet.

Die geschlossene Bucht kann zumindest eine Verbindung aufweisen. Mittels der Verbindung können zwei gegenüberliegend angeordnete Bahnteile des biegeschlaffen Materials miteinander verbunden sein. Die Verbindung kann eine Steppnaht, eine Doppelnaht, eine Ultraschallnaht und/oder Ultraschallverschweißung, eine Verklebung, eine Klammerverbindung, eine Nietverbindung, eine Spreiznietverbindung, eine Magnetverbindung, einen Druckknopf, ein Knopfloch in Verbindung mit einem Knopf, eine schräg verlaufende Naht, eine Schmelznietverbindung und/oder ähnliches aufweisen. Die Verbindung kann auf einfache Art und Weise hergestellt werden und ermöglicht die Sicherung gegen das unerwünschte versehentliche seitliche Herausfallen. Vorzugsweise ist die Verbindung seitlich an dem Fördergutbehälter angebracht, sodass sich daran anschließend die offene Bucht zur Aufnahme des Förderguts in einem inneren des Fördergutbehälters ergibt.

Gemäß einer bevorzugten Alternative ist es möglich, dass das biegeschlaffe Material eine Beplankung aufweist, an die sich in der Schließstellung und/oder Transportstellung die Bucht anschließt. Vorzugsweise ist die Beplankung in der Öffnungsstellung im Wesentlichen horizontal angeordnet. Dadurch kann in der Öffnungsstellung ein ebener Boden zur Lagerung des Förderguts gebildet werden. Bei einem Öffnen zwischen der Öffnungsstellung und der Transportstellung purzelt das Fördergut von dem Boden in die Bucht und umgekehrt. Die offene Bucht ist in der Öffnungsstellung im Wesentlichen gerade gezogen und bildet sich aufgrund einer Schwerkraft und/oder des Gewichts des Fördergutes in der Transportstellung von selbst. Ferner ist es denkbar, dass der Fördergutbehälter zwei Beplankungen aufweist, wobei in der Transportstellung die Bucht sich ausgehend von der jeweiligen Beplankung nach unten erstreckt bzw. von diesen herabhängt. In der Transportstellung kann dadurch das Fördergut in der Bucht aufgenommen werden und zumindest teilweise an den sich dann gegenüberliegend angeordneten Beplankungen anliegen, beispielsweise zwischen diesen eingeklemmt werden um zusätzlich eine Transportsicherung, insbesondere für große Transportgüter, zu bewirken.

Bei einer weiteren bevorzugten Ausführungsform weist der Fördergutbehälter die geschlossene Bucht und zumindest eine weitere geschlossene Bucht, also zwei geschlossene Buchten auf, wobei die offene Bucht zwischen den zwei geschlossenen Buchten angeordnet ist. Der Fördergutbehälter kann dadurch beidseitig mittels der geschlossenen Bucht zumindest teilweise geschlossen sein, wobei das Fördergut beidseitig gegen versehentliches Herausfallen gesichert ist. Das biegeschlaffe Material bzw. die an dem Rahmen aufgehängte und herabhängende Bahn des beigeschlaffen Materials kann seitlich jeweils umgenäht sein. Das biegeschlaffe Material weist also an seinen Rändern einen zumindest doppellagigen Saum auf. Dadurch erhöht sich seitlich eine Stabilität des Fördergutbehälters, wobei die Verbindung vorzugsweise im Bereich des Saums liegt. Im Bereich der Verbindung ist also das biegeschlaffe Material vorzugsweise vierlagig angeordnet, gegebenenfalls sechslagig. Gemäß einer alternativen Ausführung kann das biegeschlaffe Material ultraschallbeschnitten ausgeführt sein. Dadurch ergibt sich ein noch einfacherer Aufbau, wobei im Bereich der Verbindung zum Bewirken der geschlossenen Bucht das biegeschlaffe Material zweilagig ist. Zum Erzielen einer ähnlichen Stabilität wie mit Saum kann die Verbindung gegebenenfalls breiter ausgeführt sein.

Um einen möglichst großen Innenraum zum Aufnehmen des Fördergutes bereitzustellen, also eine möglichst große offene Bucht zu ermöglichen, weist die Verbindung zum Erzeugen der geschlossenen Bucht im Vergleich zu einer Gesamtbreite des Fördergutbehälters eine vergleichsweise kleine Dimensionierung auf, beispielsweise 1 bis 5 %, vorzugsweise ca. 2% der Gesamtbreite des Fördergutbehälters.

Der vorzugsweise vorgesehene Rahmen des Fördergutbehälters dient zum gelenkigen Aufhängen des biegeschlaffen Materials an zwei Enden. Dadurch hängt das biegeschlaffe Material im Wesentlichen in Form einer Kettenlinie von dem Rahmen herab und bildet dadurch die Bucht zur Aufnahme des Förderguts. Zum Verstellen des Fördergutbehälters zwischen der Öffnungsstellung und der Schließstellung sind die zwei Enden des biegeschlaffen Materials gelenkig an dem Rahmen aufgehängt. Dazu kann das biegeschlaffe Material an seinen zwei Enden umgenäht sein, sodass sich jeweils ein Auge bildet bzw. eine Schlaufe, die jeweils von gegenüberliegenden Stangen des Rahmens durchgriffen sind. Der Rahmen ist vorzugsweise verschwenkbar an einem Hängeträger angebracht, wobei durch ein Verschwenken des Rahmens das Verstellen zwischen der Öffnungsstellung und der Schließstellung des Fördergutbehälters bewirkt werden kann.

Gemäß einer ersten Alternative ist der Buchtgrund in der Schließstellung in einer vertikalen Richtung des aufgehängten Fördergutbehälters an einem tiefsten Punkt desselben angeordnet. Dadurch ist sichergestellt, dass in der Schließstellung sich gegenüberliegende Teile der Bahn des biegeschlaffen Materials im Wesentlichen möglichst parallel aufeinander liegen. Dadurch kann eine Vielzahl der Fördergutbehälter auf engstem Raum nebeneinander in Schließstellung angeordnet werden. Gemäß einer alternativen Ausführung ist in der Schließstellung die geschlossene Bucht asymmetrisch angeordnet, sodass in einer Zwischenstellung, also beispielsweise in der Transportstellung der Buchtgrund in der offenen Bucht und in der geschlossenen Bucht auf der gedachten Linie und/oder an einem tiefsten Punkt des Fördergutbehälters liegen. Dadurch ergibt sich in der Transportstellung eine optimale Sicherung des Förderguts. Insbesondere kann die asymmetrische Anordnung der geschlossenen Bucht auf vergleichsweise kleine und/oder textile Fördergüter angepasst sein.

Die Aufgabe ist außerdem durch ein Hängefördersystem mit einer Hängefördereinrichtung zum Transportieren von Fördergutbehältern gelöst. Das Hängefördersystem weist einen vorab beschriebenen Fördergutbehälter auf und/oder ist dazu eingerichtet, ausgelegt, und/oder konstruiert um mit diesem zusammen zu wirken. Das Hängefördersystem ist vergleichsweise einfach aufgebaut und ermöglicht einen sicheren/störungsfreien Transport von Fördergütern. Im Übrigen ergeben sich die vorab beschriebenen Vorteile.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispiels näher erläutert. Es zeigen:
- Figur 1: eine schematische Vorderansicht eines Fördergutbehälters mit einer offenen und beidseitig jeweils daran angrenzenden geschlossenen Bucht;
- Figur 2: eine dreidimensionale Ansicht von schräg seitlich vorne des in Figur 1 gezeigten Fördergutbehälters;
- Figur 3: eine schematische Ansicht eines teilweisen Längsschnitts des in Figur 1 gezeigten Fördergutbehälters entlang der Linie III-III;
- Figur 4: eine schematische Ansicht eines teilweisen Längsschnitts des in Figur 1 gezeigten Fördergutbehälters entlang der Linie IV-IV; und
- Figur 5: eine dreidimensionale Ansicht von schräg seitlich vorne eines aus dem Stand der Technik bekannten Fördergutbehälters mit einem separat angenähten Zwickel.

### Beschreibung bevorzugter Ausführungsbeispiele

Bevor die Erfindung im Detail beschrieben wird, ist darauf hinzuweisen, dass sie nicht auf die jeweiligen Bauteile der Einrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

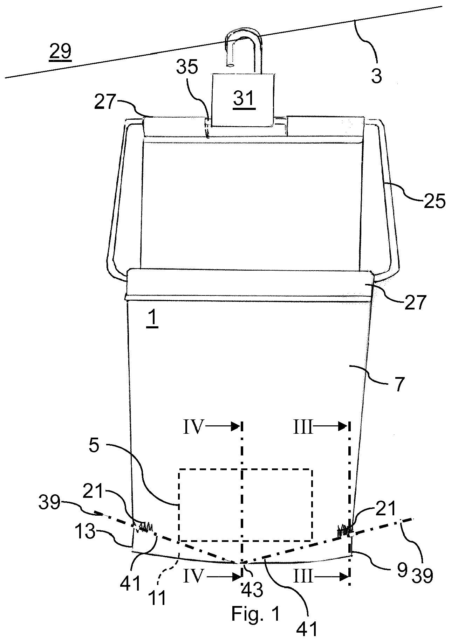

Figur 1 zeigt eine schematische Ansicht von vorne eines Fördergutbehälters 1 zum Transportieren eines innenliegend nicht sichtbaren und deshalb gestrichelt dargestellten Förderguts 5. Der Fördergutbehälter 1 weist einen Hängeträger 31 auf, der mit einem lediglich mittels des Bezugszeichens 29 angedeuteten Hängeträgersystem 29 zusammenwirkt. Genauer kann der Hängeträger 31 des Fördergutbehälters 1 in eine Hängefördereinrichtung 3 eingehängt werden, beispielsweise mittels eines in Figur 1 angedeuteten Hakens. Die Hängefördereinrichtung 3 dient zum Transportieren des gesamten Fördergutbehälters 1 und damit letztlich zum Fördern des Förderguts 5 innerhalb des Fördergutbehälters 1. Das Hängeträgersystem 29 weist vorzugsweise nicht näher dargestellte Belade- und Entladestationen auf, die zum Be- und Entladen des Fördergutbehälters 1 vorgesehen sein können. Hängeträgersysteme zum Transportieren, Be- und Entladen von Fördergutbehältern sind bekannt und werden daher nicht im Detail beschrieben.

Der Fördergutbehälter 1 weist ein biegeschlaffes Material 7 auf, das an zwei Enden 27 an einem Rahmen 25 aufgehängt ist. Dazu weist das biegeschlaffe Material 7 an seinen Enden 27 jeweils eine umgenähte Schlaufe auf, die von zwei gegenüberliegend angeordneten Stangen des Rahmens 25 durchgriffen sind. Dadurch ist das biegeschlaffe Material 7 gelenkig an dem Rahmen 25 aufgehängt. Der Rahmen 25 ist mittels eines Schwenklagers 35 verschwenkbar an dem Hängeträger 31 gelagert. Durch ein Verschwenken des Rahmens 25 kann der Fördergutbehälter 1 zwischen einer Schließstellung und einer Öffnungsstellung verstellt werden. Zwischen der Öffnungsstellung und der Schließstellung ergibt sich eine durch das Fördergut 5 bewirkte Förderstellung, die in Figur 1 gezeigt ist. Dabei ist der Rahmen 25 ausgehend von einer im Wesentlichen vertikalen Anordnung teilweise in Richtung einer horizontalen Anordnung verschwenkt. Zum Be- und/oder Entladen des Fördergutbehälters 1 ist es möglich, den Rahmen 25 in eine horizontale Position zu bringen, sodass entweder das Fördergut 5 auf einfache Art und Weise seitlich aus diesem entnommen oder in diesen hineingegeben werden kann. Oder alternativ von oben durch den Rahmen 25 hindurch in den Fördergutbehälter 1 hineingegeben werden kann. Zum Be- und/oder Entladen kann das Hängeträgersystem 29 entsprechende Mechanisierungen aufweisen, die mit dem Fördergutbehälter 1, insbesondere dem Rahmen 25 des Fördergutbehälters 1 zusammenwirken.

Wie in Figur 1 zu erkennen, ist das gestrichelt eingezeichnete Fördergut 5 in einer von dem herabhängenden biegeschlaffen Material 7 gebildeten Bucht 9 aufgenommen, also zwischen zwei sich gegenüberliegenden Bahnen des biegeschlaffen Materials 7, die an einem Buchtgrund 15 ineinander übergehen, wobei das Fördergut 5 auf dem Buchtgrund 15 aufliegt.

Wie in Figur 1 weiter zu erkennen, weist die Bucht 9 eine offene Bucht 11 auf, in der sich das Fördergut 5 befindet und beidseitig der offenen Bucht 11, also seitlich des Fördergutbehälters 1 jeweils eine geschlossene Bucht 13. Die geschlossene Bucht 13 ist jeweils mittels einer Verbindung 21 zwischen den zwei gegenüberliegenden Bahnen des biegeschlaffen Materials hergestellt. An der Verbindung 21 liegt also das biegeschlaffe Material zweilagig aufeinander und ist miteinander verbunden. Vorzugsweise weist das biegeschlaffe Material 7 seitlich jeweils eine umgenähte Kante auf, wobei sich eine besonders stabile Verbindung 21 ergibt und das biegeschlaffe Material 7 dadurch vierlagig miteinander verbunden ist. Optional kann nur einseitig die geschlossene Bucht 13 vorgesehen sein. Vorzugsweise kann in diesem Fall zum zusätzlichen Sichern des Förderguts 5 in der Transportstellung ein Lagergefälle in Richtung der geschlossene Bucht 13 vorgesehen sein.

Die zwei geschlossenen Buchten 13 bilden jeweils einen Anschlag 17 an den in der Transportstellung, wie in Figur 1 gezeigt, das Fördergut 5 angelegt werden kann, sodass dieses gegen ein versehentliches seitliches Herausfallen gesichert ist.

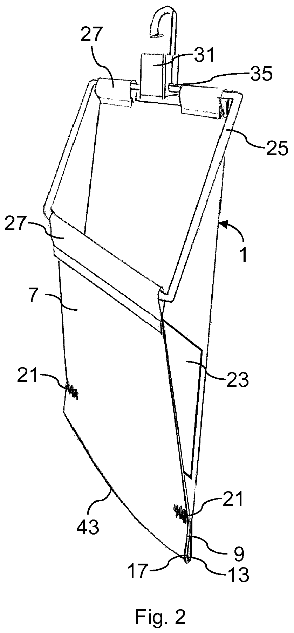

Figur 2 zeigt den in Figur 1 gezeigten Fördergutbehälter, jedoch im Unterschied in einer dreidimensionalen Ansicht von schräg seitlich vorne und ohne das Fördergut 5.

Im Unterschied ist eine optionale Beplankung 23 zu erkennen, die an einer längeren Bahn des biegeschlaffen Materials 7 angebracht ist. Optional kann gegenüberliegend der Beplankung 23 in der Figur 2 gezeigten Transportstellung und/oder Schließstellung eine weitere nicht sichtbare Beplankung angebracht sein. Es ist zu erkennen, dass sich die Bucht 9, also die offene Bucht 11 und die zumindest eine geschlossene Bucht 13 ausgehend von der zumindest einen Beplankung 23 vorzugsweise der zwei gegenüberliegend angeordneten Beplankungen vertikal nach unten bis zu dem Buchtgrund 15 erstreckt. Das Fördergut 5 kann also in der offenen Bucht 11 und je nach Größe zwischen den zwei Beplankungen 23 angeordnet und in dem Fördergutbehälter 1 transportiert werden. Durch die Beplankungen 23 ergibt sich eine zusätzliche Transportsicherung, wobei das Fördergut 5 zwischen den Beplankungen 23 eingeklemmt werden kann. Falls dies nicht genügt, kann das Fördergut 5 an die geschlossenen Buchten 13 angeschlagen und dadurch ebenfalls transportgesichert werden.

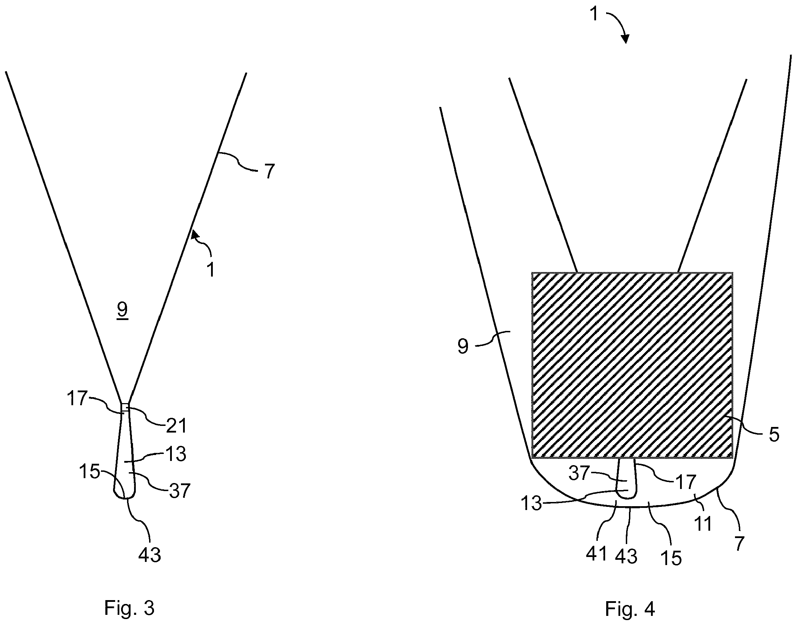

Zur Verdeutlichung zeigen die Figuren 3 und 4 jeweils schematische teilweise Längsschnitte entlang der in Figur 1 eingezeichneten Linien III-III (Figur 3) und IV-IV (Figur 4). Wie in Figuren 3 zu erkennen, ist die geschlossene Bucht 13 durch die Verbindung 21 gebildet. Die Verbindung 21 weist vorzugsweise eine Steppnaht auf, insbesondere eine doppelte Steppnaht. Es ist denkbar, dass diese schräg angeordnet ist, um eine bessere Kraftverteilung im beladenen Zustand zu bewirken. Wie in Figur 3 außerdem zu erkennen, ergibt sich durch die Verbindung 21 die geschlossene Bucht 13, die ein mittels der Verbindung 21 geschlossenes Auge 37 ausbildet. Über das Auge 37 der geschlossenen Bucht 13 kann eine eventuell in den Fördergutbehälter 1 eingebrachte Flüssigkeit, wie beispielsweise Löschwasser, wieder aus diesem austreten. Dennoch kann eine gute Transportsicherung bewirkt werden. Es kann also auf das Einnähen eines zusätzlichen Materials, gegebenenfalls unter Berücksichtigung eines Ablaufs verzichtet werden. In Figur 4 sind sowohl die offene Bucht 11, in der sich das Fördergut 5 befindet als auch die weiter hinten liegende geschlossene Bucht 13 zu erkennen, die den Anschlag 17 zur Transportsicherung bildet. Der Buchtgrund 15 liegt dabei etwas unterhalb des Fördergutes 5, wobei sich dieses gegebenenfalls seitlich mit dem biegeschlaffen Material verkrallt, was zusätzlich eine Transportsicherung bewirkt.

Außerdem ergibt sich, wie in Figur 1 schematisch mittels zwei in einem Winkel zueinander angeordneten gestrichelten Linien 39 angedeutet ist, aufgrund einer Verkürzung, die jeweils mittels der Verbindung 21 entsteht, in der gezeigten Transportstellung ein beidseitig zu einer Mitte hin gerichtetes Lagegefälle 41. Das beidseitige Lagergefälle 41 zentriert das Fördergut 5 in einem mittigen tiefsten Punkt 43 des Fördergutbehälters 1. Es ist in Figur 1 zu erkennen, dass der Buchtgrund 15 der geschlossenen Bucht 13 mit aufgenommenem Fördergut 5 in einer vertikalen Richtung des Fördergutbehälters 1 gesehen beabstandet, hier oberhalb zu des tiefsten Punktes 43 angeordnet ist. Der Buchtgrund 15 der offenen Bucht 11 liegt also in der vertikalen Richtung gesehen tiefer als der Buchtgrund 15 der geschlossenen Bucht 13 bzw. des Auges 37.

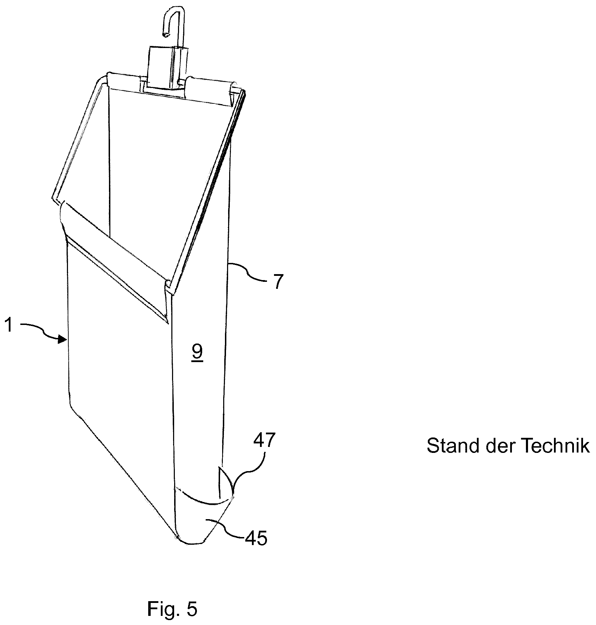

Figur 5 zeigt im Vergleich zu dem in den Figuren 1 bis 4 dargestellten erfindungsgemäßen Fördergutbehälter 1 einen Fördergutbehälter 1, wie er aus dem Stand der Technik bekannt ist. Im Folgenden wird lediglich auf die Unterschiede eingegangen. Der in Figur 5 dargestellte Fördergutbehälter 1 gemäß Stand der Technik weist als Transportsicherung einen zusätzlich seitlich an das biegeschlaffe Material 7 angenähten Zwickel 45 auf. Dazu sind eine seitlich an das biegeschlaffe Material 7 angebrachte Naht sowie ein zusätzliches Stück eines weiteren biegeschlaffen Materials 47 erforderlich, das eine zumindest teilweise ausgeführte Seitenwand bildet. Wie in den Figuren 1 bis 4 ersichtlich, kann der Fördergutbehälter 1 erfindungsgemäß seitenwandfrei ausgeführt sein, wobei auf den Zwickel 45, also die zusätzliche Naht sowie das weitere biegeschlaffe Material 47 verzichtet werden kann, ohne dass dadurch auf den gebildeten Anschlag 17 zur erfindungsgemäßen Sicherung des in dem Fördergutbehälter 1 aufnehmbaren Förderguts 5 verzichtet werden müsste.

### Bezugszeichenliste

- 1: Fördergutbehälter
- 3: Hängefördereinrichtung
- 5: Fördergut
- 7: biegeschlaffes Material
- 9: Bucht
- 11: offene Bucht
- 13: geschlossene Bucht
- 15: Buchtgrund
- 17: Anschlag
- 21: Verbindung
- 23: Beplankung
- 25: Rahmen
- 27: Ende
- 29: Hängeträgersystem
- 31: Hängeträger
- 35: Schwenklager
- 37: Auge
- 39: Linie
- 41: Lagergefälle
- 43: Punkt
- 45: Zwickel
- 47: weiteres biegeschlaffes Material

## Patentansprüche

1. Fördergutbehälter (1) für eine Hängefördereinrichtung (3) zum Transportieren eines Förderguts (5), mit einem aufgehängten biegeschlaffen Material (7), das eine Bucht (9) bildet, in der das Fördergut (5) aufnehmbar ist, **dadurch gekennzeichnet, dass** die Bucht (9) entlang einer Breite eines biegeschlaffen Materials (7) eine offene Bucht (11) zur Aufnahme des Förderguts (5) und daran angrenzend zumindest eine geschlossene Bucht (13) aufweist, wobei an der geschlossenen Bucht (13) das biegeschlaffe Materials (7) bereichsweise zusammengeführt ist.

2. Fördergutbehälter nach Anspruch 1, **dadurch gekennzeichnet, dass** der Fördergutbehälter (1) zwischen einer Öffnungsstellung und einer Schließstellung verstellbar ist und mit aufgenommenem Fördergut (5) eine zwischen der Öffnungsstellung und der Schließstellung liegende Transportstellung einnimmt, wobei in der Schließstellung oder in der Transportstellung und ohne aufgenommenes Fördergut (5) jeweils ein sich ergebender Buchtgrund (15) der offenen Bucht (11) und der geschlossenen Bucht (13) auf einer gedachten geradlinigen Linie und mit aufgenommenem Fördergut (5) auf einer gedachten gekrümmten Linie liegen.

3. Fördergutbehälter nach Anspruch 1 oder 2, **dadurch gekennzeichnet, dass** die geschlossene Bucht (13) zumindest eine der folgenden Verbindungen (21) aufweist: Eine Steppnaht, eine Doppelnaht, eine Ultraschallnaht, eine Verklebung, eine Klammerverbindung, eine Nietverbindung, eine Magnetverbindung, eine Druckknopfverbindung, ein Knopfloch in Kombination mit einem Knopf, eine schräg verlaufende Naht, eine Schmelznietverbindung, eine Spreiznietverbindung.

4. Fördergutbehälter nach einem der vorhergehenden Ansprüche, **dadurch gekennzeichnet, dass** das biegeschlaffe Material (7) eine Beplankung (23) aufweist, an die sich in der Schließstellung und/oder Transportstellung die Bucht (9) anschließt und die vorzugsweise in der Öffnungsstellung im Wesentlichen horizontal angeordnet ist.

5. Fördergutbehälter nach einem der vorhergehenden Ansprüche, **dadurch gekennzeichnet, dass** der Fördergutbehälter (1) seitlich gegenüber liegend angeordnet die zumindest eine geschlossene Bucht (13) und eine weitere Bucht (13) aufweist, wobei zwischen den geschlossenen Buchten (13) die offene Bucht (11) angeordnet ist.

6. Fördergutbehälter nach Anspruch 5, **dadurch gekennzeichnet, dass** die geschlossene Bucht (13) und/oder die weitere geschlossene Bucht (13) jeweils 1 bis 5%, vorzugsweise 2% einer Breite des Fördergutbehälters (1) ausmacht.

7. Fördergutbehälter nach einem der vorhergehenden Ansprüche, **dadurch gekennzeichnet, dass** der Fördergutbehälter (1) einen Rahmen (25) aufweist, an dem zwei Enden (27) des die Bucht (9) bildenden biegeschlaffen Materials (7) gelenkig aufgehängt sind.

8. Fördergutbehälter nach einem der Ansprüche 2 bis 7, **dadurch gekennzeichnet, dass** der Buchtgrund (15) in der Schließstellung in einer vertikalen Richtung des aufgehängten Fördergutbehälters (1) gesehen, an einem tiefsten Punkt (43) liegt.

9. Fördergutbehälter nach einem der Ansprüche 2 bis 7, **dadurch gekennzeichnet, dass** der Buchtgrund (15) in der Transportstellung in einer vertikalen Richtung des aufgehängten Fördergutbehälters (1) gesehen mittig an einem tiefsten Punkt (43) liegt und sich von dort mit einem Lagergefälle (41) ansteigend bis zu einem Auge (37) der geschlossenen Bucht (13) erstreckt.

10. Hängeträgersystem (29) mit einer Hängefördereinrichtung (3) zum Transportieren von Fördergutbehältern (1) **dadurch gekennzeichnet, dass** zumindest einer der Fördergutbehälter (1) nach einem der Ansprüche 1 bis 9 ausgebildet ist und/oder dazu eingerichtet, und/oder konstruiert ist, um mit diesem zusammenzuwirken.
